# EUROPÄISCHE PATENTANMELDUNG

(11) **EP 0 806 580 A1**
(43) Veröffentlichungstag der Anmeldung: **12.11.1997**
(21) Anmeldenummer: 97107288.9
(22) Anmeldetag: 02.05.1997
(51) Int. Cl.: F16D 7/04, F16D 43/202, B60K 25/00

(54) **Vorrichtung zur Überlastsicherung zwischen einer angetriebenen Einrichtung und einem antreibenden Getriebe**

(30) Priorität: 10.05.1996 DE 19618808
(71) Anmelder: ZF FRIEDRICHSHAFEN Aktiengesellschaft, 88038 Friedrichshafen (DE)
(72) Erfinder: Sauer, Manfred, 88079 Kressbronn (DE)

(57) **Zusammenfassung**

Eine Vorrichtung zur Überlastsicherung zwischen einer angetriebenen Einrichtung und einem antreibenden Getriebe in einem Kraftfahrzeug weist folgende Merkmale auf: eine Zahnkupplung weist eine Axialverzahnung (7, 8) zwischen einem Zahnrad (3) und einem Schaltring (5) auf. Der Schaltring (5) ist durch eine Schiebemuffe (9) axial verschieblich, jedoch drehfest, auf einem Überlastring (4) angeordnet. Der Überlastring (4) ist drehfest auf einer Welle (1) durch Federkraft in Richtung auf die Axialverzahnung (7, 8) vorgespannt. Bei Überschreiten eines vorgegebenen Drehmomentes an der Axialverzahnung (7, 8) und Überschreiten der Federvorspannkraft ist der Überlastring (4) auf der Welle (1) axial in Richtung einer Kupplungslösung verschiebbar.

## Beschreibung

Die Erfindung betrifft eine Vorrichtung zur Überlastsicherung zwischen einer angetriebenen Einrichtung und einem antreibenden Getriebe in einem Kraftfahrzeug.

In einem Kraftfahrzeug werden verschiedene Nebenaggregate, wie z. B. Lüfter, Kompressoren und Pumpen, an ein Getriebe, im allgemeinen an das Schaltgetriebe, angekoppelt und als sogenannte Getriebe-Nebenabtriebe über das Schaltgetriebe als antreibende Kraft angetrieben.

Ein Problem bei derartigen Antrieben liegt darin, daß bei Betriebsstörungen in der angetriebenen Einrichtung dynamische Lastspitzen auftreten, die zur Zerstörung des antreibenden Getriebes, wie z. B. einem Gehäuse- oder Wellenbruch, führen können. Um diese Zerstörung zu vermeiden, werden in der Praxis diese Lastspitzen mit innerhalb des Getriebes oder des angetriebenen Nebenabtriebes angebrachten Sollbruchstellen abgefangen. Derartige Sollbruchstellen können z. B. relativ dünnwandige Laufbuchsen sein, die zwei hintereinander angeordnete Wellen miteinander über ein Zahnprofil verbinden. Bei einer Überlastung der Laufbuchse bricht diese auseinander und unterbricht damit den Drehmomentenfluß.

Nachteilig bei dieser Lösung ist jedoch, daß nach einem derartigen Bruch einer Sollbruchstelle hohe Reparaturkosten, wie z. B. durch einen Getriebeausbau, anfallen. Darüber hinaus ergibt sich beim Bruch eine Gefährdung des Getriebes durch herumfliegende Bruchstücke. Nachteilig ist auch die große Streuung um den Sollbruchwert, wodurch die Einstellung der Überlastung, bei welchem der Sollbruch stattfinden soll, relativ ungenau ist.

Der vorliegenden Erfindung liegt daher die Aufgabe zugrunde, eine Vorrichtung zur Überlastsicherung zu schaffen, die bei Überschreiten eines definierten Drehmomentes den Kraftfluß zwischen der angetriebenen Einrichtung und dem antreibenden Getriebe zerstörungsfrei unterbricht.

Erfindungsgemäß wird diese Aufgabe durch die in Anspruch 1 genannten Merkmale gelöst.

Kernstück der erfindungsgemäßen Vorrichtung bildet dabei die Zahnkupplung mit der Axialverzahnung. Der Flankenwinkel einer derartigen Axialverzahnung erzeugt eine von der Größe des übertragenen Drehmomentes linear abhängige axiale Trennkraft. Dies bedeutet, daß die beiden Kupplungsteile, nämlich das Zahnrad und der Schaltring, durch eine Vorspannkraft in axialer Richtung aneinandergedrückt werden müssen, damit der eingekuppelte Zustand bestehen bleibt. Wählt man nun eine Vorspannkraft aus, die genau definiert ist und die bei Überschreiten eines vorgegebenen Drehmomentes überschritten wird, so erreicht man auf einfache Weise eine Öffnung der Zahnkupplung. Die Öffnung kann dabei ohne Zerstörung irgendwelcher Teile erfolgen.

Die Wiederherstellung des Kraftflusses kann anschließend durch ein einfaches erneutes Einkuppeln der Zahnkupplung erfolgen.

Von Vorteil ist auch, daß die erfindungsgemäße formschlüssige Vorrichtung auf einfache Weise als sogenannte Aus-/Ein-Schaltung fungiert und in den Nebenabtrieb, d. h. in die angetriebene Einrichtung, oder auch in das antreibende Getriebe integrierbar ist.

In einer vorteilhaften Ausgestaltung der Erfindung kann vorgesehen sein, daß die Federkraft durch ein oder mehrere Ringfedern gebildet ist, die in Ringnuten der Welle liegen.

Durch Ringfedern läßt sich eine gewünschte axiale Vorspannkraft relativ genau einstellen.

Eine sehr vorteilhafte Weiterbildung der Erfindung kann darin bestehen, daß die Ringfedern nach Überschreiten eines vorgewählten Drehmomentes in ein oder mehrere Ringnuten, die von der Axialverzahnung weiter entfernt liegen, als die für den Normalbetrieb vorgesehenen Ringnuten, einschiebbar sind.

Diese Lösung ist konstruktiv relativ einfach realisierbar und zum Wiedereinrücken der Zahnkupplung ist es lediglich erforderlich, die Ringfedern wieder entsprechend in die für den Normalbetrieb vorgesehenen Ringnuten zurückzuschieben.

Um die Rückstellkräfte zu reduzieren und damit die Rückstellung zu erleichtern, kann in einer Weiterbildung der Erfindung vorgesehen sein, daß die Ringnuten so ausgebildet sind, daß die Rückstellkräfte kleiner sind als die Kupplungsausschaltkräfte.

In einer konstruktiven Lösung hierfür kann vorgesehen sein, daß die Winkel der Ringnutwände in Richtung der Kupplungsausschaltkräfte steiler sind als die Winkel der Ringnutwände in Richtung der Rückstellkräfte.

Um die Schiebemuffe von den axialen Kräften der Axialverzahnung freizuhalten, können zwischen der Schiebemuffe, dem Überlastring und dem Schaltring kugelförmige Körper angeordnet sein.

Durch eine Ringfeder zwischen dem Schaltring und dem Überlastring wird eine Positionierung des Schaltrings in der "Not-Aus"-Position erreicht.

Nachfolgend ist ein Ausführungsbeispiel der Erfindung anhand der Zeichnung prinzipmäßig dargestellt.
Es zeigt:
- Fig. 1: einen teilweisen Axialschnitt durch die Vorrichtung zur Überlastsicherung in "Aus"-Position;
- Fig. 2: einen Schnitt entsprechend dem nach der Fig. 1 in "Ein"-Position und
- Fig. 3: einen Schnitt entsprechend denen nach den Fig. 1 und 2 in einer "Not-Aus"-Position.

Auf einer Welle 1 ist über einer Laufbuchse 2 relativ zu der Welle 1 drehbar ein Zahnrad 3 angeordnet. Über eine Keilverzahnung ist ein Überlastring 4 drehfest mit der Welle 1 verbunden. Ebenfalls drehfest, jedoch axial verschieblich, ist auf dem Überlastring 4 ein Schaltring 5 angeordnet. Die axiale Verschieblichkeit kann z. B. durch ein Keilwellenprofil zwischen dem Überlastring 4 und dem Schaltring 5 erreicht werden.

Das Zahnrad 3 weist neben seiner Verzahnung 6 am Umfang eine Axialverzahnung 7 auf. In gleicher Weise weist der Schaltring 5 auf der dem Zahnrad 3 zugewandten Seite eine entsprechende Axialverzahnung 8 auf.

Zur axialen Verschiebung des Schaltringes 5 ist eine Schiebemuffe 9 vorgesehen, die eine Schaltnut 10 aufweist, in welche ein nicht dargestelltes Schaltglied eingreift.

Die Schiebemuffe 9 weist an ihrem hinteren, d. h. von dem Zahnrad 3 abgewandten, Ende einen Anschlagring 11 auf. Zwischen dem Überlastring 4, dem Schaltring 5 und der Schiebemuffe 9 befinden sich in einer ringförmigen Aussparung Kugeln 12.

Der Überlastring 4 weist auf der der Welle 1 zugewandten Seite eine Ringnut 13 auf, in der zwei Ringfedern 14 axial hintereinander liegen. Im Bereich der Ringnut 13 bzw. der Ringfedern 14 weist die Welle 1 zwei ebenfalls axial hintereinanderliegende rastenartige Ringnuten 15 auf, in denen die Ringfedern 14 mit einem Teil ihrer inneren Umfangswände aufgenommen sind.

Die erfindungsgemäße Überlastsicherungsvorrichtung funktioniert nun auf folgende Weise:

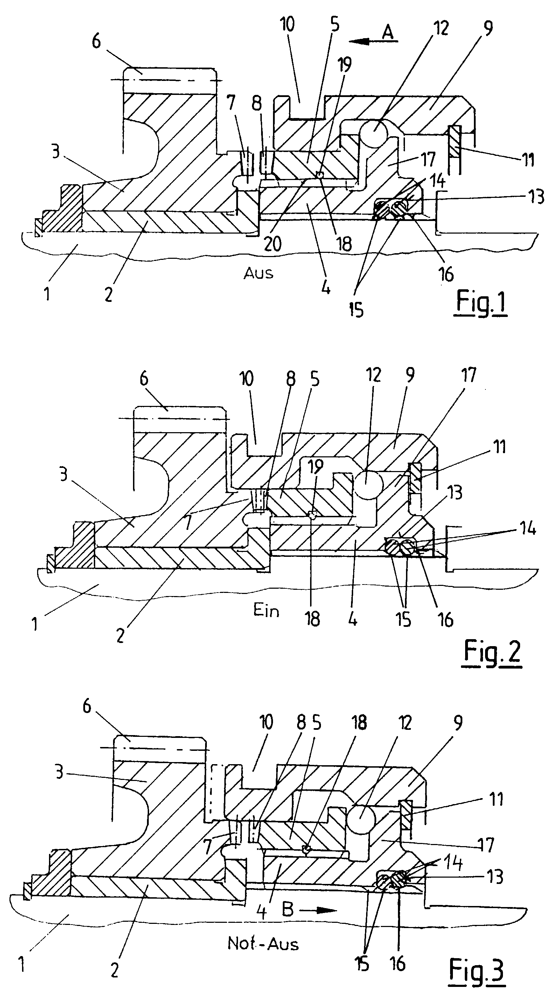

Die Fig. 1 zeigt die "Aus"-Position. Die Vorrichtung selbst kann an beliebiger Stelle zwischen der angetriebenen Einrichtung und dem antreibenden Getriebe angeordnet sein. Bei dem dargestellten Ausführungsbeispiel stellt das Zahnrad 3 die Eingangsseite und damit die Verbindung zu dem - nicht dargestellten - antreibenden Schaltgetriebe dar, während die Welle 1 zu der nicht dargestellten angetriebenen Einrichtung, nämlich einem Nebenaggregat, führt. Diese Kraftflußrichtung ist jedoch beliebig. Selbstverständlich ist auch die umgekehrte Anordnung möglich, wobei die Welle 1 einen Teil des antreibenden Getriebes, z. B. eines Schaltgetriebes, darstellt und das Zahnrad 3 zu dem Nebenaggregat führt.

Zur Verbindung der angetriebenen Einrichtung mit dem antreibenden Getriebe und damit mit dem Zahnrad 3 wird die Schiebemuffe 9 in Pfeilrichtung A durch das in die Schaltnut 10 eingreifende, nicht dargestellte Schaltglied in Richtung auf das Zahnrad 3 verschoben. Diese Verschiebung wird dabei dadurch erreicht, daß die Schiebemuffe 9 über die Kugeln 12, die an einer axialen Fläche des Schaltringes 5 anliegen, den Schaltring 5 axial verschieben, wobei die beiden Axialverzahnungen 7 und 8 miteinander in Eingriff kommen. Diese Position ist in der Fig. 2 dargestellt. Der Anschlagring 11 der Schiebemuffe 9 liegt dabei an der Rückseite einer axialen Erstreckung 17 des Überlastringes 4 an.

Aufgrund der Axialverzahnung treten bei der Kraftübertragung zwischen dem Zahnrad 3 und dem Schaltring 5 Trennkräfte auf. Diese Trennkräfte werden durch die vorgespannten Ringfedern 14 in ihrer Wirkung im Normalbetrieb kompensiert. Tritt jedoch eine Überlast auf, die die Vorspannkraft der beiden Ringfedern 14 übersteigt, so werden diese aus ihren Ringnuten 15 gedrängt. Wie ersichtlich, befindet sich hinter den beiden Ringnuten 15 bzw. auf der von dem Zahnrad 3 abgewandten Seite eine weitere Ringnut 16. Die weitere Ringnut 16 befindet sich auf einem größeren Radius auf der Welle 1 wie die beiden Ringnuten 15 bzw. der Boden der Ringnut 16 befindet sich auf einem größeren Radius. Dies bedeutet, die hintere Ringfeder 15 muß bei dem Not-Aus-Schaltvorgang auf einen höheren Radius angehoben werden. Auf diese Weise wird zwar eine hohe Kraft für den Ausschaltvorgang erreicht, für einen nachfolgenden Wiedereinschaltvorgang sind jedoch deutlich geringere Kräfte erforderlich.

Den gleichen Zweck erreicht man auch, wenn die Winkel der Ringnutwände in Richtung der Kupplungsausschaltkräfte steiler sind als die Winkel der Ringnutwände in Richtung der Rückstellkräfte.

Durch diese Ausgestaltung wird eine Art "Servostellung" erreicht, so daß - wie erwähnt - die Rückstellkräfte deutlich kleiner werden als die Abschaltkräfte. Bei gegebener Ringfederanzahl, Drahtdurchmesser, Ringfedervorspannung und Reibwert bestimmt nämlich der Tangens des Rastenwinkels der Ringnut 15 die Überschiebekraft. Die Rastenwinkel werden somit so festgelegt, daß die Ausschaltkräfte groß, die Rückstellkräfte hingegen klein sind.

Bei dem Not-Aus-Schaltvorgang wandert die dem Zahnrad 3 näherliegende Ringfeder 14 in die hintere Ringnut 15 und rastet dort ein, während die hintere - bezogen auf das Zahnrad 3 - Ringfeder 14 in die Ringnut 16 der Welle 1 "aufsteigt" und dort einrastet.

Wie aus der Fig. 3 ersichtlich ist, wird auf diese Weise durch die axiale Bewegung des Überlastringes 4 in Pfeilrichtung B die Schiebemuffe 9 aufgrund der Anlage des Anschlagringes 11 an der axialen Erweiterung 17 des Überlastringes ebenfalls in Pfeilrichtung B verschoben.

Die Mitnahme des Schaltringes 5 und dessen Positionierung während der Not-Aus-Position aufgrund einer aufgetretenen Überlastung bzw. Lastspitze wird durch eine Ringfeder 18 erreicht, die sich zwischen dem Überlastring 4 und dem Schaltring 5 befindet. Um die gewünschte Rastposition des Überlastringes 5 zu erreichen, liegt die Ringfeder 18 entsprechend teilweise in einer Ringnut 19 des Schaltringes 5 und teilweise in einer Ringnut 20 des Überlastringes 4. Die Federkraft der Ringfeder 18 ist in Verbindung mit dem Rastwinkel der Ringnut 20 so gewählt, daß diese wesentlich niedriger ist als die Vorspannkraft der Ringfedern 14, so daß sich der Überlastring 4 in der in der Fig. 1 dargestellten Aus-Position axial relativ zu dem Schaltring 5 verschieben kann.

Zweck der Ringfeder 18 ist lediglich, den Schaltring 5 in der Not-Aus-Position relativ zu dem Überlastring 4 positioniert zu halten bzw. den Schaltring 5 beim Übergang von der Ein-Position gemäß Fig. 2 zu der Not-Aus-Position gemäß Fig. 3 mitzunehmen und in der in der Fig. 3 dargestellten Position zu halten. Auf diese Weise wird vermieden, daß in der Not-Aus-Position der Schaltring 5 durch eine entsprechende axiale Verschiebung sich in Richtung des Zahnrades 3 so verschieben kann, daß die Axialverzahnungen 7 und 8 "aneinandergeraten".

Ist der Grund für die Überlastung bzw. das Auftreten der Lastspitze beseitigt, so kann die Vorrichtung durch ein einfaches Einschalten und anschließendes Ausschalten aus der in der Fig. 3 dargestellten Lage in die in der Fig. 1 dargestellte Lage gebracht und anschließend wieder in die normale Ein-Position geschaltet werden.

### Bezugszeichen

- 1: Welle
- 2: Laufbuchse
- 3: Zahnrad
- 4: Überlastring
- 5: Schaltring
- 6: Verzahnung
- 7: Axialverzahnung
- 8: Axialverzahnung
- 9: Schiebemuffe
- 10: Schaltnut
- 11: Anschlagring
- 12: Kugeln
- 13: Ringnut
- 14: Ringfedern
- 15: Ringnuten
- 16: Ringnuten
- 17: Erweiterung
- 18: Ringfeder
- 19: Ringnut
- 20: Ringnut

## Patentansprüche

1. Vorrichtung zur Überlastsicherung zwischen einer angetriebenen Einrichtung und einem antreibenden Getriebe in einem Kraftfahrzeug mit folgenden Merkmalen:
a) eine Zahnkupplung weist eine Axialverzahnung (7, 8) zwischen einem Zahnrad (3) und einem Schaltring (5) auf;
b) der Schaltring (5) ist durch eine Schiebemuffe (9) axial verschieblich, jedoch drehfest, auf einem Überlastring (4) angeordnet;
c) der Überlastring (4) ist drehfest auf einer Welle (1) durch Federkraft in Richtung auf die Axialverzahnung (7, 8) vorgespannt und
d) bei Überschreiten eines vorgegebenen Drehmomentes an der Axialverzahnung (7, 8) und Überschreiten der Federvorspannkraft ist der Überlastring (4) auf der Welle (1) axial in Richtung einer Kupplungslösung verschiebbar.

2. Vorrichtung nach Anspruch 1, dadurch **gekennzeichnet,** daß die Federkraft durch ein oder mehrere Ringfedern (14) gebildet ist, die in Ringnuten (15) der Welle (1) liegen.

3. Vorrichtung nach Anspruch 2, dadurch **gekennzeichnet,** daß die Ringfedern (14) nach Überschreiten eines vorgewählten Drehmomentes in ein oder mehrere Ringnuten (16), die von der Axialverzahnung (7, 8) weiter entfernt liegen als die für den Normalbetrieb vorgesehenen Ringnuten (15), einschiebbar sind.

4. Vorrichtung nach Anspruch 3, dadurch **gekennzeichnet,** daß die Ringnuten (15, 16) so ausgebildet sind, daß die Rückstellkräfte kleiner sind als die Kupplungsausschaltkräfte.

5. Vorrichtung nach Anspruch 4, dadurch **gekennzeichnet,** daß die Winkel der Ringnutwände in Richtung der Kupplungsausschaltkräfte steiler sind als die Winkel der Ringnutwände in Richtung der Rückstellkräfte.

6. Vorrichtung nach einem der Ansprüche 1 bis 5, dadurch **gekennzeichnet,** daß zwischen der Schiebemuffe (9), dem Überlastring (4) und dem Schaltring (5) kugelförmige Körper (12) angeordnet sind.

7. Vorrichtung nach einem der Ansprüche 1 bis 6, dadurch **gekennzeichnet,** daß zwischen dem Schaltring (5) und dem Überlastring (4) eine Ringfeder (18) in einer Ringnut (19) angeordnet ist.
